(19) Europäisches Patentamt
European Patent Office
Office européen des brevets

(11) Veröffentlichungsnummer: **0 338 209**
**A2**

(12) **EUROPÄISCHE PATENTANMELDUNG**

(21) Anmeldenummer: **89102977.9**

(22) Anmeldetag: **21.02.89**

(51) Int. Cl.$^4$: **C08L 71/04 , C08L 77/00 , C08G 65/48**

(30) Priorität: **21.04.88 DE 3813354**

(43) Veröffentlichungstag der Anmeldung: **25.10.89 Patentblatt 89/43**

(84) Benannte Vertragsstaaten: **AT BE DE FR GB IT NL SE**

(71) Anmelder: **HÜLS AKTIENGESELLSCHAFT**
**- RSP Patente / PB 15 - Postfach 13 20**
**D-4370 Marl 1(DE)**

(72) Erfinder: **Neugebauer, Wolfgang, Dr.**
**Karl-Leisner-Strasse 3**
**D-4408 Dülmen-Merfeld(DE)**
Erfinder: **Kowalczik, Udo, Dr.**
**Camillo-Sitte-Weg 4**
**D-4630 Bochum 1(DE)**
Erfinder: **Bartmann, Martin, Dr.**
**Burgstrasse 35**
**D-4350 Recklinghausen(DE)**
Erfinder: **Mügge, Joachim, Dr.**
**Droste-Hülshoff-Strasse 7**
**D 4350 Haltern(DE)**

(54) **Thermoplastische Formmassen auf Basis von funktionalisierten Polyphenylenethern und Polyamiden.**

(57) Ziel der Erfindung war es, leicht herstellbare Formmassen auf Basis von Polyphenylenethern und Polyamiden bereit zu stellen, die sich zu Formteilen mit überlegenen Eigenschaften verarbeiten lassen.

Die jetzt gefundenen Formmassen enthalten einen in bestimmter Weise funktionalisierten Polyphenylenether und ein Polyamid.

Die aus den Formmassen hergestellten Formteile finden dort Verwendung, wo es auf hohe Schlagzähigkeit, hohe Lösemittelbeständigkeit und hohe Wärmeformbeständigkeit ankommt.

EP 0 338 209 A2

# Thermoplastische Formmassen auf Basis von funktionalisierten Polyphenylenethern und Polyamiden

Polyphenylenether (PPE) sind technische Hochleistungsthermoplaste mit hohen Schmelzviskositäten und Erweichungspunkten. Sie kommen vor allem dort zum Einsatz, wo es auf Beständigkeit bei hohen Temperaturen ankommt (vgl. US-PSS 3 306 874, 3 306 875, 3 257 357 und 3 257 358). Formteile aus reinen Polyphenylenethern sind allerdings wegen ihrer schlechten Schlagzähigkeit spröde, und die Lösemittelbeständigkeit ist unbefriedigend; daher setzt man üblicherweise Mischungen aus Polyphenylenethern mit anderen Thermoplasten ein.

Abmischungen von Polyphenylenethern mit Polyamiden weisen eine gute Lösemittelbeständigkeit und eine gute Fließfähigkeit auf (DE-OS 16 94 290 und JP-OS 78/47 390). In der Regel werden aber spröde Produkte erhalten, da die beiden Komponenten unverträglich sind. Aromatische Polyamide, wie sie beispielsweise gemäß EP-OS 0 131 445 eingesetzt werden, lassen sich zudem mit Polyphenylenethern schlecht verarbeiten. Eine bessere Verträglichkeit der beiden Phasen wird durch eine Funktionalisierung des Polyphenylenethers, z. B. mit Maleinsäureanhydrid in Gegenwart von Radikalbildnern, erreicht (JP-OS 84 066 452). Dieser Vorteil wird allerdings mit einer partiellen Vergelung der PPE-Phase erkauft.

Es ist daher vorgeschlagen worden, die Verträglichkeit beider Polymeren durch Zusatz einer ausreichenden Menge eines Fließmittels, z. B. eines organischen Phosphats (vgl. EP-OS 0 129 825) oder eines Diamids (vgl. EP-OS 0 115 218), zu erhöhen. Der verbesserten Verträglichkeit steht jedoch eine erheblich reduzierte Wärmeformbeständigkeit gegenüber. Den gleichen Nachteil weisen Formmassen auf, denen Copolymere aus Styrol und ungesättigten Säurederivaten zugesetzt worden sind (vgl. EP-OS 0 046 040).

Gegenstand der EP-PS 0 024 120 sind Harzmassen, die aus einem Polyphenylenether, einem Polyamid, einer dritten Komponente und gegebenenfalls hochmolekularen Kautschuken bestehen. Als dritte Komponente wird ein flüssiges Dienpolymer, ein Epoxid oder eine Verbindung mit einer Doppel- oder Dreifachbindung und einer funktionellen Gruppe (wie z. B. Säure, Anhydrid, Ester, Amino- oder Alkoholgruppe) eingesetzt. Die Zähigkeit der erhaltenen Harzmassen reicht aber für viele Anwendungen nicht aus.

Das in der JP-OS 84/86 653 beschriebene Verfahren sieht vor, 100 Teile Polyphenylenether mit 10 bis 300 Teilen einer Mischung aus 50 bis 99 % Styrol und 50 bis 1 % ungesättigten Carbonsäuren oder Anhydriden radikalisch zu pfropfen und das Produkt mit Polyamiden abzumischen; die entstehenden Formteile weisen zwar gute mechanische Eigenschaften auf, doch ist infolge des beträchtlichen Polystyrolanteils die Wärmeformbeständigkeit beeinträchtigt.

In der EP-OS 0 185 054 wird die Funktionalisierung von Polyphenylenethern durch Umsetzung der Polymeren mit Hydroxypolycarbonsäuren bzw. deren Derivaten in der Schmelze beschrieben. Nach Abmischen mit Polyamiden erhält man Formmassen, deren Reißdehnungs- und Kerbschlagwerte auf eine nicht befriedigende Anbindung an den Phasengrenzflächen schließen lassen.

Gegenstand der EP-OS 0 195 815 ist die Funktionalisierung von Polyphenylenethern mit Trimellitsäureanhydridchlorid in Lösung. Die Blends mit Polyamiden scheinen zwar tendenziell besser als im vorherigen Fall zu sein, jedoch bedingt es die beschriebene Funktionalisierung, daß entweder Chlorwasserstoff oder - bei Zusatz eines tertiären Amins -beträchtliche Mengen an Ammoniumchloriden entstehen und somit Korrosionsprobleme auftreten. Die wirtschaftlich interessante Direktisolation des Polyphenylenethers durch Abziehen des Lösungsmittels kann in diesem Fall nicht angewendet werden.

In der EP-OS 0 211 201 wird eine Zusammensetzung aus Polyphenylenethern und Polyamiden angegeben, die durch Verkappen der endständigen OH-Gruppen des Polyphenylenethers und anschließende Polymerisation eines Lactams hergestellt wird. Das Verkappungsmittel wirkt in diesem Fall als Promoter für die Lactampolymerisation.

Geeignete Promotoren sind Maleinsäureanhydrid, Cyanurchlorid, N,N′-Carbonyldiimidazol, Phenylchlorformiat und andere starke Lewissäuren, die mindestens bifunktionell sind. Diese Zusammensetzungen können jedoch in der Praxis nicht befriedigen. Die funktionellen Gruppen der Promotoren sind chemisch nicht stabil, und die Beschränkung auf Polyamide, die durch Polymerisation von Lactamen erhalten werden, wird als einengend empfunden.

Aus der deutschen Offenlegungsschrift 36 00 366 sind thermoplastische Formmassen bekannt, die als wesentliche Komponenten einen Polyphenylenether, ein Kammpolymer mit einem Kohlenwasserstoff als Hauptkette und Polyphenylenethern als Seitenketten, ein funktionalisiertes Polyethylen und ein Polyamid enthalten. Es handelt sich also um eine recht komplexe Mischung, bei der jede der 4 Komponenten erforderlich ist, um sowohl eine gute Verträglichkeit als auch eine hohe Schlagzähigkeit und Wärmeformbeständigkeit zu gewährleisten. Es wäre wünschenswert, könnte man diese Ziele auch auf einfachere Weise erreichen.

Die DE-OSS 36 15 393 und 36 21 805 beschreiben Formmassen, die neben einem Polyamid eine

umgeschmolzene Vorformmasse enthalten. Letztere besteht aus einem Polyphenylenether, einem Polyoctenylen und mindestens einer Säurekomponente wie z. B. Maleinsäureanhydrid. In beiden Fällen ist es also erforderlich, den Polyphenylenether mit einer chemisch aggressiven Säurekomponente umzuschmelzen und einen Schlagzähmacher zuzusetzen, um ein qualitativ befriedigendes Niveau der Kerbschlagzähigkeit zu erreichen; ein ähnliches Verfahren wird in der EP-OS 0 232 363 beschrieben.

Die aus dem Stand der Technik bekannten Formmassen sind also entweder nur auf aufwendige Weise herstellbar oder in dem Eigenschaftsbild der aus ihnen hergestellten Formteile unbefriedigend. Ziel der Erfindung war es, diese Nachteile zu vermeiden.

Es wurden jetzt thermoplastische Formmassen gefunden, die lediglich 2 wesentliche Komponenten enthalten, nämliche einen in spezieller Weise funktionalisierten Polyphenylenether und ein Polyamid. Der funktionalisierte Polyphenylenether weist die allgemeine Formel

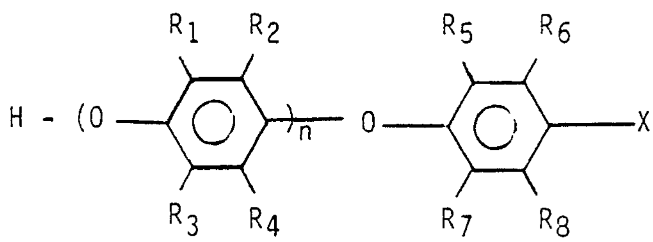

auf. $R_1$, $R_3$, $R_5$ und $R_7$ sind entweder gleiche oder unterschiedliche Reste aus der Gruppe Phenyl und primäres oder sekundäres Alkyl mit 1 bis 10 C-Atomen oder $R_1$ und $R_5$ sind Wasserstoff und $R_3$ und $R_7$ stehen für einen tert. Alkylrest mit 4 bis 10 C-Atomen. $R_2$, $R_4$, $R_6$ und $R_8$ sind gleiche oder unterschiedliche Reste aus der Gruppe Wasserstoff und Alkylrest mit 1 bis 10 C-Atomen.

n ist eine Zahl zwischen 20 und 200.

X ist eine weiter unten definierte funktionelle Gruppe.

$R_1$ und $R_3$ sind unabhängig voneinander insbesondere Alkylreste mit 1 bis 6 C-Atomen, vorzugsweise Methylreste.

$R_2$ ist insbesondere ein Alkylrest mit 1 bis 6 C-Atomen oder vorzugsweise, wie auch $R_4$, $R_6$ und $R_8$ Wasserstoff.

$R_5$ und $R_7$ sind vorzugsweise Methylreste.

Der funktionalisierte Polyphenylenether weist insbesondere eine Viskositätszahl J von 20 bis 80 $cm^3/g$ auf und wird durch oxidative Kupplung eines Phenols der Formel

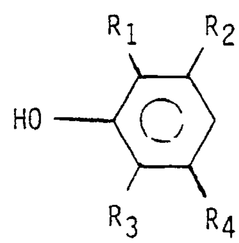

in Gegenwart einer geringen Menge eines funktionalisierten Phenols der Formel

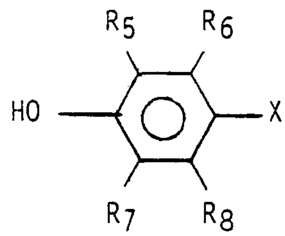

erhalten.

Als Polyamide werden vorzugsweise PA 6, PA 46, PA 66, PA 612, PA 11, PA 12 oder PA 1212

eingesetzt. Das Molekulargewicht sollte über 5 000, insbesondere über 10 000, liegen.

Schließlich können die erfindungsgemäßen Massen insbesondere noch einen Schlagzähmacher, wie z. B. Polyoctenylen oder einen EP(D)M-Kautschuk, in einer Menge von 2 bis 25 Gew.-% enthalten.

Die erfindungsgemäßen thermoplastischen Formmassen stellen einen deutlichen Fortschritt gegenüber dem Stand der Technik dar, da sie auf wesentlich einfachere Weise zugänglich sind. Bei der Polykondensation entsteht direkt ein funktionalisierter Polyphenylenether; es entfällt also insbesondere eine nachträgliche Funktionalisierung des Polyphenylenethers, die erfahrungsgemäß nur mit großer Schwierigkeit selektiv ausführbar ist. Es entfallen korrosive bzw. toxische Funktionalisierungsmittel wie z. B. Maleinsäureanhydrid. Gleichzeitig entfällt die Notwendigkeit, korrosive bzw. toxische Nebenprodukte wie Chlorwasserstoffe und dessen Salze abzutrennen. Die funktionellen Gruppen sind hinreichend aktiv, um in der Schmelze mit den Polyamiden zu reagieren.

Als funktionalisierte Polyphenylenether werden Verbindungen der allgemeinen Formel

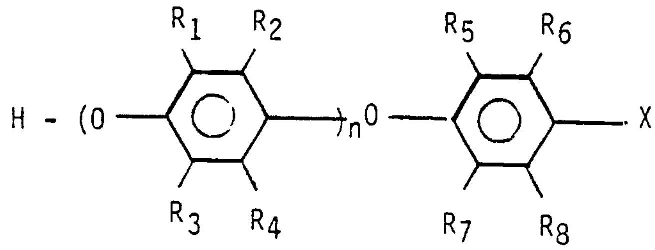

eingesetzt. $R_1$, $R_3$, $R_5$ und $R_7$ können entweder gleiche oder unterschiedliche Reste aus der Gruppe Phenyl, Benzyl und primäres oder sekundäres Alkyl mit 1 bis 10 C-Atomen sein, oder $R_1$ und $R_5$ sind Wasserstoff und $R_3$ und $R_7$ bedeuten einen tert. Alkylrest mit 4 bis 10 C-Atomen. $R_2$, $R_4$, $R_6$ und $R_8$ sind gleiche oder unterschiedliche Reste aus der Gruppe Wasserstoff und Alkylrest mit 1 bis 10 C-Atomen. Vorzugsweise sind $R_1$ und $R_3$ gleiche oder unterschiedliche Alkylreste mit bis zu 6 C-Atomen; besonders bevorzugt sind $R_1$ und $R_3$ Methylreste.

Vorzugsweise ist $R_2$ ein Alkylrest mit bis zu 6 C-Atomen oder insbesondere Wasserstoff.

Vorzugsweise ist $R_4$ Wasserstoff.

$R_5$ und $R_7$ sind vorzugsweise Methylreste und $R_6$ und $R_8$ Wasserstoff.

n ist eine Zahl zwischen 10 und 200.

X kann folgende Bedeutungen haben:

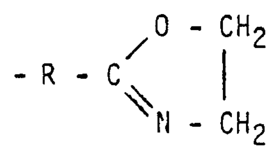

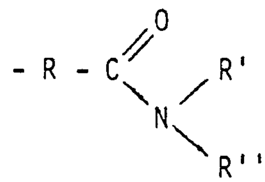

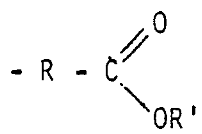

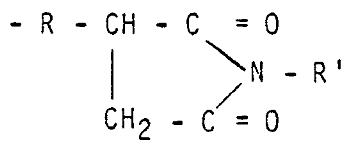

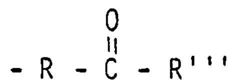

R ist eine Einfachbindung oder ein zweiwertiger aliphatischer Rest mit 1 bis 12 C-Atomen.

R′, R″ und R‴ sind unabhängig voneinander Wasserstoff oder Alkylreste mit bis zu 10 C-Atomen, die durch Hydroxylgruppen substituiert sein können. Der funktionelle Rest von X ist vorzugsweise eine Ester- oder Oxazolingruppe. Der funktionalisierte Polyphenylenether weist üblicherweise eine Viskositätszahl J von 20 bis 80 $cm^3/g$ auf. Er wird insbesondere durch oxidative Kupplung eines Phenols der Formel

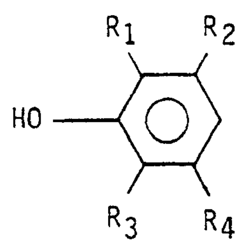

in Gegenwart einer geringen Menge eines funktionalisierten Phenols der Formel

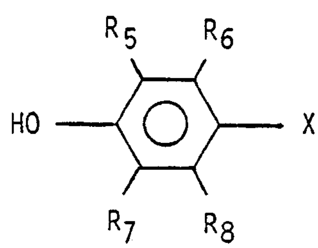

erhalten. Im Gemisch der Phenolmonomeren liegt der Anteil des funktionalisierten Phenols vorzugsweise

zwischen 0,2 und 4, insbesondere zwischen 0,5 und 3,0 Mol-%.

Die funktionalisierten Phenole lassen sich z. B. nach folgenden Methoden herstellen:

1. Carboxylierung des Natrium- oder Kaliumsalzes eines o,o′-Dialkylphenols (W. H. Meck et al., Journal of Chemical and Engineering Data 14, 388 - 391 (1969); die entstandene Carbonsäure kann durch Standardreaktionen in Ester, Amide oder Oxazoline übergeführt werden.

2. Behandlung eines o,o′-Dialkylphenol-Alkylcarbonsäureesters wie z. B. 2,6-Dimethylphenylacetat mit Aluminiumtrichlorid (H. Henecka in "Methoden der organischen Chemie", (Houben-Weyl), Band 7/2a, S. 379 ff., Thieme-Verlag, Stuttgart 1973). Das entstehende p-Acyl-o,o′-dialkylphenol kann entweder selbst als Funktionalisierungsmittel eingesetzt oder mit Schwefel und einem Amin nach Willgeroth-Kindler über eine Carbonsäure in die entsprechenden Ester, Amide usw. überführt werden.

3. Umsetzung eines Phenols unter saurer oder alkalischer Katalyse mit einer Substanz, die sowohl eine C-C-Doppelbindung bzw. eine unter Carbeniumionbildung leicht abspaltbare Gruppe als auch eine funktionelle Gruppe wie COOH, Ester, Amid, Imid oder ähnliche besitzt. Hier kommen vor allem in Frage:

a) Acrylsäuren bzw. ihre Derivate, z. B. Zimtsäure, Zimtsäuremethylester, Isopropylidencyanacrylsäureethylester, Benzylidenmalonsäurediethylester.

b) Diels-Alder-Addukte aus ggf. substituierten Butadienen und Alkylenmono- oder -dicarbonsäure(derivaten). Derartige funktionalisierte Phenole werden z. B. in EP-OS 0 106 799 beschrieben. Geeignete Diels-Alder-Addukte sind z. B. diejenigen aus Butadien und Maleinsäurediethylester, Cyclopentadien und Fumarsäuredibutylester sowie Isopren und Maleinsäureanhydrid (siehe Beispiele 1.1 bis 1.3).

c) En-Addukte aus Fumarsäure- oder Maleinsäurederivaten und Olefinen.

d) Hydroxycarbonsäuren wie z. B. Mandelsäure

Die Herstellung von Polyphenylenethern der allgemeinen Formeln

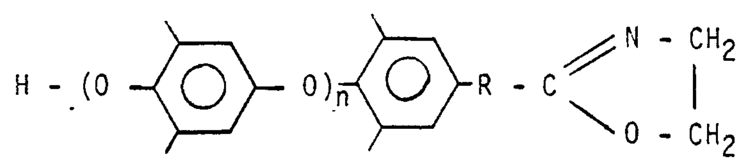

und

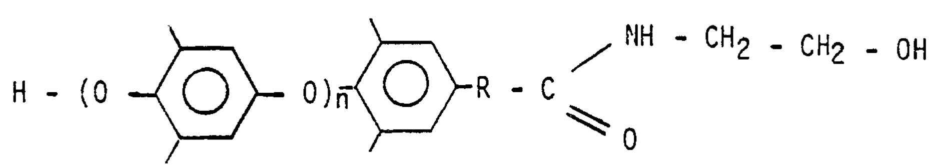

ist Gegenstand der deutschen Patentanmeldung ("Funktionalisierte Polyphenylenether und Verfahren zu ihrer Herstellung" (P 38 13 355) des gleichen Anmelders vom gleichen Anmeldetag.

Die Polykondensation zum funktionalisierten Polyphenylenether kann nach jedem dem Stand der Technik entsprechenden Verfahren durchgeführt werden. Üblicherweise erfolgt dies durch Oxidation des Phenolgemisches mit einem Sauerstoff enthaltenden Gas wie z. B. Luft oder reinem Sauerstoff, in Gegenwart eines Kupfersalzes und eines basischen, vorzugsweise aminischen Cokatalysators (vgl. DE-OSS 32 24 692 und 32 24 691).

Als Polyamide kommen Homo- und Copolymere in Frage, die vorzugsweise ausschließlich aliphatischer Struktur sind. Insbesondere seien hier die 6-, 46-, 66-, 612-, 11-, 12- und 1212-Polyamide aufgeführt. Die Kennzeichnung der Polyamide entspricht internationaler Norm, wobei die erste(n) Ziffer(n) die C-Atomzahl des Ausgangsamins und die letzte(n) Ziffer(n) die C-Atomzahl der Dicarbonsäure angeben. Wird nur eine Zahl angegeben, so bedeutet dies, daß von einer Aminocarbonsäure bzw. deren Lactam ausgegangen wird (H. Domininghaus "Die Kunstoffe und ihre Eigenschaften", VDI Verlag, 1976, Seite 272). Geeignet sind aber auch gemischte aliphatisch-aromatische Copolyamide (vgl. US-PSS 2 071 250, 2 071 251, 2 130 523, 2 130 948, 2 241 322, 2 312 966, 2 512 606, 3 393 210; Kirk-Othmer, Encyclopedia of chemical technology, Vol. 18, John-Wiley & Sons (1982), Seiten 328 und 435). Das Zahlenmittel des Molekulargewichts der Polyamide sollte über 5 000, vorzugsweise über 10 000, liegen.

Die erfindungsgemäßen Formmassen können zusätzlich Styrolharze enthalten, z. B. glasklares Polystyrol, schlagzäh modifiziertes Polystyrol, Styrol-Acrylnitril-Copolymere und Styrol-Butadien-Copolymere, entweder als statistische Copolymere (z. B. DURANIT[R] der Hüls AG) oder als Blockcopolymere, die ggf.

hydriert sind, (z. B. KRATON[R] der Shell Chemical Co.). Bei der bevorzugten Ausführungsform der vorliegenden Erfindung wird jedoch kein Styrolharz eingesetzt, da dieses die Wärmestandfestigkeit der thermoplastischen Massen herabsetzt.

Für anspruchsvolle Anwendungszwecke kann es sinnvoll sein, zusätzlich einen Schlagzähmacher zuzugeben. Dieser Schlagzähmacher kann z. B. ein Kautschuk oder ein teilkristalliner Thermoplast sein. In Frage kommen beispielsweise Ethylen-Propylen-Copolymere, Ethylen-Propylen-Dien-Terpolymere, Polypentenylen, Polyoctenylen, Polyethylen oder Mischungen daraus. Der Schlagzähmacher kann dem Stand der Technik entsprechend funktionalisiert sein, z. B. durch Umsetzung mit Maleinsäureanhydrid.

Die Vereinigung der Polyamide mit dem funktionalisierten Polyphenylenether erfolgt in einem gut knetenden Aggregat bei 250 bis 350 °C, vorzugsweise bei 270 bis 310 °C. Es ist vorteilhaft, die Komponenten trocken vorzumischen und dann zu extrudieren oder das Polyamid in die Schmelze des Polyphenylenethers zu dosieren.

Die erfindungsgemäßen thermoplastischen Massen können daneben einen Flammschutz sowie weitere Zusatzstoffe, wie Pigmente, Oligo- und Polymere, Antistatika, Stabilisatoren und Verarbeitungshilfsmittel sowie Verstärkungsmittel, enthalten. Der Anteil der Verstärkungsmittel kann bis zu 50 %, der der Flammschutzmittel bis zu 15 % und der aller übrigen Zusatzstoffe insgesamt bis zu 5 %, jeweils bezogen auf die gesamte Formmasse, betragen.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. Infrage kommen dabei Halogen enthaltende organische Verbindungen, wie sie z. B. in der Monographie von H. Vogel "Flammfestmachen von Kunststoff", Hüthig-Verlag, 1966, auf den Seiten 94 bis 102 beschrieben werden. Es kann sich dabei aber auch um halogenierte Polymere, wie z. B. halogenierte Polyphenylenether (siehe DE-OS 3334 068) oder bromierte Oligo- bzw. Polystyrole, handeln. Die Verbindungen sollen mehr als 30 Gewichtsprozent Halogen enthalten.

Im Falle des Einsatzes von halogenhaltigen Flammschutzmitteln empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Verstärkungsmittel eignen sich insbesondere Glas- und Kohlenstofffasern.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Die erhaltenen Formmassen lassen sich mit den für die Thermoplastverarbeitung üblichen Verfahren, wie z. B. Spritzgießen und Extrusion, zu Formkörpern verarbeiten.

Beispiele für technische Anwendungsgebiete sind Rohre, Platten, Gehäuse und sonstige technische Artikel für den Automobil-, Elektro- und Feinwerksektor.

Die erfindungsgemäßen Formmassen zeichnen sich gegenüber den Produkten des Standes der Technik durch eine hohe Zähigkeit bei guter Wärmeformbeständigkeit und Lösemittelbeständigkeit aus.

Die Viskositätszahl (J) des Polyphenylenethers wurde nach DIN 53 728 bei 25 °C in Chloroform (Konzentration 5 g/l) in $cm^3/g$ gemessen.

Die relative Viskosität $Eta_{rel}$ des Polyamids wurde mit einem Ubbelohde-Viskosimeter bei 25 °C in m-Kresol (Konzentration 5 g/l) bestimmt.

Die Reißdehnung (Epsilon $_R$) wurde nach DIN 53 455 an bei 290 °C gespritzten Schulterstäben bestimmt.

1. Herstellung von funktionellen Comonomeren

<u>Beispiel 1.1</u>

732 g 2,6-Dimethylphenol (6,00 Mol), 996 g (6,00 Mol) 4-Methyl-cis-4-cyclohexen-1,2-dicarbonsäureanhydrid und 600 ml 85prozentige Phosphorsäure werden 9 Stunden bei 130 °C gerührt. Die abgekühlte Mischung wird mit 2,0 l Toluol und 2,0 l Wasser versetzt. Die toluolische Phase wird abgetrennt, mit 4,0 l Petrolether versetzt und bei 40 °C aufbewahrt. Die nach 2 Tagen gebildete Kristallfraktion wird aus einem Toluol-Heptan-Gemisch umkristallisiert. Man erhält 726 g eines Reaktionsproduktes mit einen Schmelzpunkt von 142 °C; nach IR, Elementaranalyse und $^1H$-NMR liegt folgende Struktur vor:

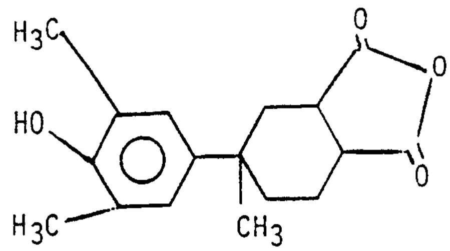

Beispiel 1.2

480 g des unter Beispiel 1.1 erhaltenen Anhydrids werden mit einem Gemisch aus Ethanol und Toluol unter Zusatz von 10,0 g p-Toluolsulfonsäure azeotrop verestert. Man erhält 604 g eines Öls, das laut Analyse folgende Struktur aufweist:

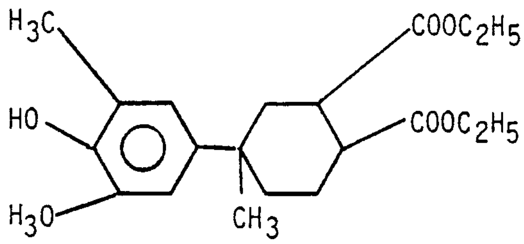

Beispiel 1.3

480 g (1,67 Mol) des unter Beispiel 1.1 erhaltenen Anhydrids werden in 2,0 l heißem Xylol gelöst, mit 156.2 g Anilin versetzt und am Wasserabscheider so lange unter Rückfluß erhitzt, bis sich 1,67 Mol Wasser abgeschieden hat. Anschließend wird das Reaktionsprodukt mit 4,0 l Heptan versetzt und auf +4 °C gekühlt. Man erhält 502 g Produkt; laut IR, Elementaranalyse und $^1$H-NMR-Spektrum hat dieses folgende Struktur:

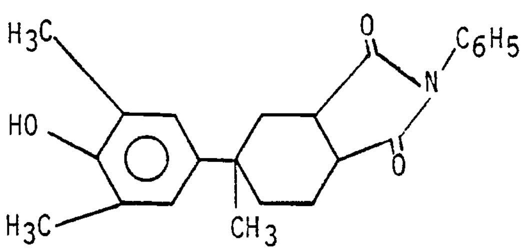

2. Herstellung von funktionalisierten Polyphenylenethern:

Beispiel 2.1

Eine Lösung von 17,82 kg 2,6-Dimethylphenol (99,0 Mol-%) und 0,534 kg des Diesterphenols aus Beispiel 1.2 (1,0 Mol-%) in 18 kg Toluol werden unter Luftbegasung innerhalb von 30 Minuten in eine gerührte, auf 30 °C thermostatisierte Mischung aus 156,0 kg Toluol, 25,2 kg Methanol, 3,6 kg Morpholin, 91,0 g $CuCl_2 \cdot 2 H_2O$ und 91,6 g N,N′-Di-tert.-butylethylendiamin gegeben. Man läßt 2 Stunden reagieren und stoppt die Reaktion durch Zusatz von 100 l Wasser und Durchleiten von $CO_2$. Nach Phasentrennung

und zweimaliger Heißwasserwäsche bei 80 °C jeweils mit einer Mischung aus 100 l Wasser und 0,25 kg Triethanolamin wird das Produkt mit 220 kg Methanol gefällt, zweimal mit je 100 kg Methanol gewaschen und getrocknet. Man erhält 16,3 kg eines fast weißen Pulvers mit einem J-Wert von 42 $cm^3/g$. Das IR-Spektrum zeigt Estergruppen bei 1 737 $cm^{-1}$ an.

Beispiel 2.2

Analog zu Beispiel 2.1 werden 17,82 kg 2,6-Dimethylphenol (99,0 Mol-%) und 0,536 kg des Imidphenols aus Beispiel 1.3 (1,0 Mol-%) umgesetzt. Man erhält 16,5 kg eines fast weißen Pulvers mit einem J-Wert von 44 $cm^3/g$. Das IR-Spektrum zeigt Imidgruppen bei 1 705 $cm^{-1}$ an.

Beispiel 2.3

Durch ein Gemisch aus 8 l Toluol, 1,4 l Methanol, 160 g Morpholin und 40 g einer Katalysatorlösung aus 31 g 48-prozentiger Bromwasserstoffsäure und 10 g basischem Kupfercarbonat wird bei 30 °C Luft geleitet (1 000 l/h). Innerhalb von 20 Minuten wird ein Gemisch aus 792 g 2,6-Dimethylphenol (99,0 Mol-%), 12,53 g 2-(4-Hydroxy-3,5-dimethylphenyl)-2-oxazolin (1,0 Mol-%) und 900 ml Toluol zugetropft. Danach läßt man weitere 70 Minuten reagieren und stoppt die Reaktion durch Zugabe einer Mischung aus 2,30 l Wasser und 7 g Triethanolamin und 10-minütiges Einleiten von $CO_2$ (2 000 l/h). Die organische Phase wird abgetrennt, mit 8 g 2,6-Di-tert.-butyl-4-methylphenol, 3 l Wasser und 9 g Triethanolamin versetzt und 15 Minuten unter Rückfluß gekocht. Nach erneuter Abtrennung wird die organische Phase mit 20 l Methanol gefällt, mit Methanol gewaschen und getrocknet. Ausbeute 734 g; J = 46 $cm^3/g$. Analyse N: ber. 0,16 %; gef. 0,18 %.

3. Herstellung von Formmassen

Beispiel 3.1

Auf einem Leistritz-Doppelschneckenextruder mit der Typenbezeichnung LSM 30.34 werden 2,0 kg funktionalisierter Polyphenylenether gemäß Beispiel 2.1 mit 3,0 kg Polyamid 12 ($Eta_{rel}$ = 1,88) bei 290 °C in der Schmelze gemischt, stranggranuliert und getrocknet. Das Produkt wird zu Normkörpern verspritzt und geprüft. Die erhaltenen Werte gehen aus der Tabelle hervor.

Beispiel 3.2

Analog zu Beispiel 3.1 werden 2,0 kg funktionalisierter Polyphenylenether gemäß Beispiel 2.2 eingesetzt.

Beispiel 3.3

Analog zu Beispiel 3.1 werden 2,0 kg funktionalisierter Polyphenylenether gemäß Beispiel 2.1 mit 3,0 kg eines schlagzähen Polyamids, hergestellt aus 85 % Polyamid 12 und 15 % EXXELOR 1803 (mit Maleinsäureanhydrid funktionalisierter Ethylen-Propylen-Kautschuk der Fa. Exxon Chemicals; Produktbezeichnung zum Warenzeichen angemeldet) in der Schmelze gemischt.

Beispiel 3.4

Analog zu Beispiel 3.1 werden 2,0 kg funktionalisierter Polyphenylenether gemäß Beispiel 2.3 mit 3,0 kg eines Polyamid 12 ($Eta_{rel}$ = 1.191) gemischt.

Vergleichsbeispiel A

Analog zu Beispiel 2.1 stellt man unter Verwendung von 18,00 kg 2,6-Dimethylphenol einen unfunktionalisierten Polyphenylenether her. 2,0 kg dieses Polymeren werden analog zu Beispiel 3.1 mit 3,0 kg Polyamid 12 ($Eta_{rel}$ = 1,88) gemischt.

Tabelle

| Zusammensetzung der Formmassen und Eigenschaften der erhaltenen Formteile | | | | | | | | |
|---|---|---|---|---|---|---|---|---|
| Beispiel | Polyphenylenether (%) | Polyamid 12 (%) | EPM-Kautschuk (%) | Kerbschlag nach DIN 53 453 ($kJ/m^3$) | | | | Reißdehnung Epsilon $_R$ (%) |
| | | | | Raumtemperatur | 0 °C | -20 °C | -40 °C | |
| A | 40 | 60 | - | 3 | 3 | 3 | 3 | 3 |
| 3.1 | 40 | 60 | - | 9 | 7 | 6 | 6 | 62 |
| 3.2 | 40 | 60 | - | 9 | 6 | 5 | 5 | 57 |
| 3.3 | 40 | 51 | 9 | 24 | 14 | 11 | 8 | 79 |
| 3.4 | 40 | 60 | - | 10 | 8 | 6 | 5 | 67 |

**Ansprüche**

1. Thermoplastische Formmassen auf Basis von funktionalisierten Polyphenylenethern und Polyamiden, dadurch gekennzeichnet,
daß man als funktionalisierten Polyphenylenether Verbindungen der Formel

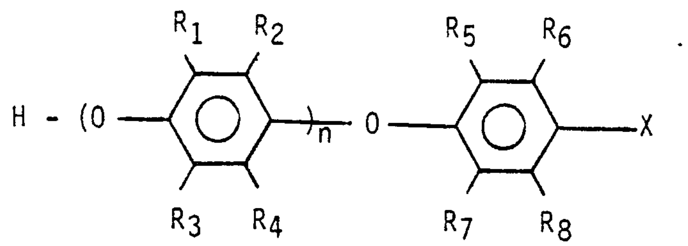

einsetzt, wobei $R_1$, $R_3$, $R_5$ und $R_7$ entweder gleiche oder unterschiedliche Reste aus der Gruppe Phenyl, Benzyl und primäres oder sekundäres Alkyl mit 1 bis 10 C-Atomen sein können oder $R_1$ und $R_5$ Wasserstoff sind und $R_3$ und $R_7$ für einen tert. Alkylrest mit 4 bis 10 C-Atomen stehen, $R_2$, $R_4$, $R_6$ und $R_8$ gleiche oder unterschiedliche Reste aus der Gruppe Wasserstoff und Alkylrest mit 1 bis 10 C-Atomen sind,
n eine Zahl zwischen 10 und 200 bedeutet und
X folgende Bedeutungen haben kann:

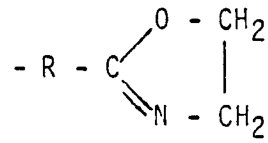

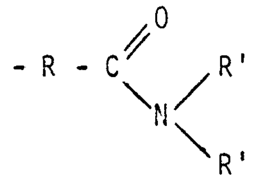

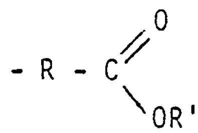

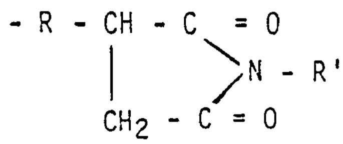

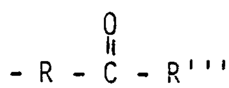

wobei R entweder eine Einfachbindung ist oder einen zweiwertigen aliphatischen Rest mit 1 bis 12 C-Atomen bedeutet und

$R'$, $R''$ und $R'''$ jeweils Wasserstoff oder einen C(1-10) Alkylrest bedeuten, der gegebenenfalls durch OH-Gruppen substituiert sein kann.

2. Formmassen nach Anspruch 1,
dadurch gekennzeichnet,
daß $R_1$ und $R_3$ unabhängig voneinander Alkylreste mit 1 bis 6 C-Atomen sind, $R_2$ Wasserstoff oder ein Alkylrest mit 1 bis 6 C-Atomen ist und $R_4$ Wasserstoff ist.

3. Formmassen nach Anspruch 2,
dadurch gekennzeichnet,
daß $R_1$ und $R_3$ Methylreste sind und $R_2$ und $R_4$ Wasserstoff bedeuten.

4. Formmassen nach den Ansprüchen 1 bis 3,
dadurch gekennzeichent,
daß $R_5$ und $R_7$ Methylreste sind und $R_6$ und $R_8$ Wasserstoff bedeuten.

5. Formmassen nach den Ansprüchen 1 bis 4,
dadurch gekennzeichnet,
daß R eine Einfachbindung darstellt.

6. Formmassen nach den Ansprüchen 1 bis 5,
dadurch gekennzeichnet,
daß X für die Gruppe

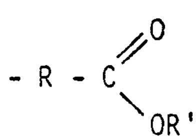

steht.

7. Formmassen nach den Ansprüchen 1 bis 6,
dadurch gekennzeichnet,
daß ein funktionalisierter Polyphenylenether mit einer Viskositätszahl J von 20 bis 80 $cm^3/g$ eingesetzt wird, der durch oxidative Kupplung eines Phenols der Formel

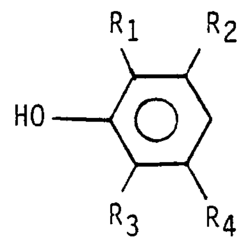

in Gegenwart einer geringen Menge eines funktionalisierten Phenols der Formel

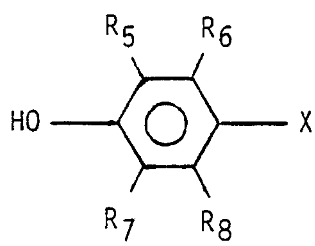

erhalten wird.

8. Formmassen nach den Ansprüchen 1 bis 7,
dadurch gekennzeichnet,
daß als Polyamid PA 6, PA 46, PA 66, PA 612, PA 11, PA 12 oder PA 1212 eingesetzt wird.

9. Formmassen nach den Ansprüchen 1 bis 8,
dadurch gekennzeichnet,
daß das Zahlenmittel des Molekulargewichts der Polyamide über 5 000, vorzugsweise über 10 000, liegt.

10. Formmassen nach den Ansprüchen 1 bis 9,
dadurch gekennzeichnet,
daß die Massen zusätzlich einen Schlagzähmacher in einer Menge von 2 bis 25 Gew.-% enthalten.

11. Formmassen nach Anspruch 10,
dadurch gekennzeichnet,
daß der Schlagzähmacher ein Polyoctenylen oder EP(D)M-Kautschuk ist.